# EUROPEAN PATENT SPECIFICATION

(11) **EP 2 678 088 B1**
(45) Date of publication and mention of the grant of the patent: **03.06.2020**
(21) Application number: 12749064.7
(22) Date of filing: 22.02.2012
(51) Int. Cl.: B01D 35/30, B01D 29/88, B01D 35/18, B01D 29/11, B01D 29/90

(54) **MODULAR FILTER CAPSULE APPARATUS**
MODULARE FILTERKAPSELVORRICHTUNG
APPAREIL DE CAPSULE DE FILTRE MODULAIRE

(30) Priority: 24.02.2011 US 201161446487 P; 22.02.2012 US 201213401866
(43) Date of publication of application: 01.01.2014
(73) Proprietor: Saint-Gobain Performance Plastics Corporation, Solon, OH 44139 (US)
(72) Inventor: Lin, Zhenwu, Pasadena, CA 91105 (US)
(74) Representative: Zimmermann & Partner Patentanwälte mbB
(86) International application number: PCT/US2012/025989
(87) International publication number: WO 2012/115991

(56) References cited:
- WO-A1-02/22232
- FR-A1- 2 345 201
- US-A- 4 045 345
- US-A- 4 298 465
- US-A1- 2001 000 893
- US-A1- 2010 282 665

## Description

### FIELD OF THE DISCLOSURE

The disclosure relates to filter capsules having housings used to enclose filters that separate and remove solid, liquid and/or gaseous contaminants and/or intermix and introduce one fluid or gas into a second fluid or gas. More particularly, the disclosure concerns filter housing and filter capsule inlet and outlet configurations to improve serviceability and adaptability to larger assemblies.

### BACKGROUND OF THE DISCLOSURE

To filter fluids and/or gases of undesired contaminants, filters are used in enclosed housings to effectuate contaminant removal. In a common filter capsule configuration, ports are positioned to occupy different planes or extend from the capsule in different directions, such as shown in published application No.: US 2010/0282665. In that application, the inlet and outlet ports are positioned at diametrically opposed locations at the top end of the capsule. This configuration requires a substantial amount of space within a larger assembly to receive the capsule and to secure the ports, which thereby limits the possible orientation variations when mounted to a panel. It further increases the effort needed to attach the capsule as connections have to be made at two entirely different locations. What is needed is a filter capsule having ports oriented to extend from a capsule in a uniform direction to reduce the space required for attachment to a larger assembly and to facilitate connection of tubes for the ingress and egress of desired fluids and/or gases.

A further problem associated with filter capsules is the common location of inlet ports at the top of the capsules. For the infusion of hot liquids, such as hot water for sanitation processes, a significant temperature gradient is created whereby the fluid in the top end of the capsule has a much higher temperature than the fluid located toward the bottom of the capsule. What is needed is an inlet system that originates from the top, but that directs incoming hot liquids to the bottom of the capsule to allow rising heat transfer in liquids and/or gases to create a significantly more uniform temperature gradient. These and other objects of the disclosure will become apparent from a reading of the following summary and detailed description of the disclosure as well as a review of the appended drawings. WO 02/22232 A1 is concerned with a liquid filtration device with internal flow paths that facilitate the purging of air bubbles from the device. The device includes internal channels that collect bubbles from fluid entering the filtration device and more efficiently direct fluid to sweep bubbles from the device during operation. US 4 298 465 A is concerned with an apparatus for separating and filtering low density fluid from higher density fluids and particles, and more particularly with a self-contained apparatus which can be retrofitted into existing new and used engines and which provides for early separation of the fluids to ensure long filter element life. FR 2 345 201 A1 is concerned with filter elements and methods of making filter elements of the kind in which fibres bonded together are provided to clean streams of gas or liquid.

### SUMMARY OF THE DISCLOSURE

The present invention is defined in the claims. In one aspect of the disclosure, a filter capsule apparatus is provided as defined in claim 1. The apparatus for enclosing filters includes a plurality of ports extending from a top end of a capsule whereby at least a portion of each port may extend at an angle substantially orthogonal to the longitudinal axis of the capsule. Alternatively, the angle may deviate by about +/- 30°, and as much as +/- 45° from the orthogonal orientation. The ports are further oriented to extend from the capsule in the same general direction. Each port is dedicated to a particular function, e.g., inlet, outlet and vent.

In another aspect of the disclosure, the ports include quick coupling fittings to facilitate expedient, efficient and reliable connection and disassembly to larger assemblies or dedicated ingress or egress tubes. Each coupling may be configured as either a male or female fitting to accommodate a variety of connection configurations and requirements. Each coupling may further be configured to include a check valve integrated with either a male or female configured fitting.

The fluid inlet is formed and positioned at a top end of a capsule. The inlet is connected to, and in fluid communication with, a proximal end of a transfer tube that extends from a top of the capsule to a point in close proximity to the bottom of the capsule. A distal end of the tube opens into the filter chamber and allows for the flow of fluids introduced into the tube to flow into the filter chamber from a bottom end of the chamber.

In a still further aspect of the disclosure, the use of a filter capsule apparatus for creating a uniform temperature gradient of a fluid is provided, as defined in claim 9. The filter capsule includes a cylindrical shield formed or placed inside the capsule between the capsule inner wall and a filter secured therein. The shield extends from substantially the top of the inner capsule to a point or plane in close proximity to, but not in substantial contact with, a bottom of the capsule so as to form a gap between a bottom edge of the shield and the inner wall of the capsule bottom. The shield combines with the capsule inner wall to form a first annular chamber that extends substantially from the inner top of the capsule to a point or plane in close proximity to, but not in contact with, the bottom of the capsule. A second annular chamber is formed between an inner wall of the shield and the enclosed filter. The gap formed at the bottom between the shield and the capsule bottom allows fluid communication between the chambers at the bottom of the capsule. An inlet configured on the capsule to be in fluid communication with the first chamber allows fluid to flow from the inlet down through the first annular chamber, through the gap and up into the second, filter-containing chamber.

The apparatus for securing and containing a filter includes a capsule having a series of ports extending from a top end of the capsule. Each port is oriented to extend substantially along the longitudinal axis of the capsule. The ports are configured to extend in substantially the same direction so as to facilitate manual connection to larger assemblies including panel mounts. These and other aspects of the disclosure will become apparent from a review of the appended drawings and a reading of the following detailed description of the disclosure.

### BRIEF DESCRIPTION OF THE DRAWINGS

FIG. 1 is a side elevational view of a filter capsule according to one embodiment of the disclosure.
FIG. 2 is a bottom view of the filter capsule embodiment shown in FIG. 1.
FIG. 3 is a perspective view of the filter capsule embodiment shown in FIG. 1.
FIG. 4 is a side elevational view of a filter capsule according to another embodiment of the disclosure.
FIG.5 is a sectional, perspective view of a filter capsule and port fittings according to one embodiment of the disclosure.
FIG. 6 is a sectional, perspective view of a filter capsule and port fittings according to another embodiment of the disclosure.
FIG. 7 is a sectional perspective view of a filter capsule and ports fittings according to a further embodiment of the disclosure.
FIG. 8 is a side elevational view of a filter capsule according to a further embodiment of the disclosure.
FIG. 9 is a bottom view of the filter capsule embodiment shown in FIG. 8.
FIG. 10 is a perspective view of the filter capsule embodiment shown in FIG. 8.
FIG. 11 is a sectional, perspective view of the filter capsule and port fittings according to the embodiment of the disclosure shown in FIG. 8.

### DETAILED DESCRIPTION OF THE DISCLOSURE

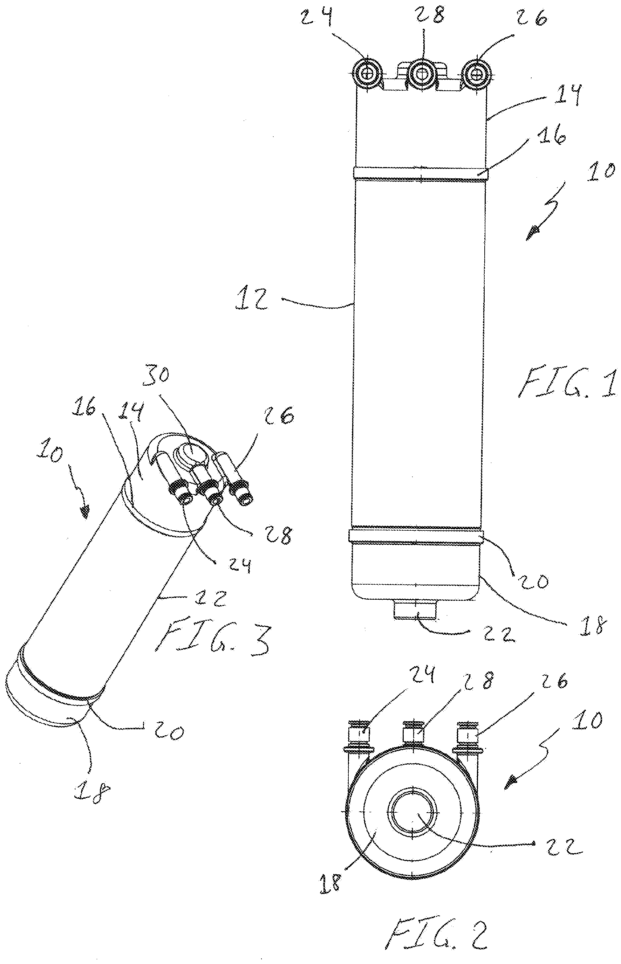

Referring to FIGS. 1-3 and 5-7, in one aspect of the disclosure, a filter capsule apparatus is shown generally as **10.** Capsule **10** includes a substantially cylindrical body **12** that defines a generally hollow filter chamber configured to hold one or more filters **34.** Capsule **10** may be formed in other regular or irregular geometric shapes to accommodate a wide variety of larger assembly configurations to which the capsule is attached and/or to accommodate a wide variety of filter shape configurations depending upon the application.

To enclose a proximal, top end of capsule **10**, a top cap **14** having a substantially cylindrical shape conformed to the shape and dimensions of capsule body **12** and having an enclosed end and an opposing open end is thermally welded to the proximal end of body **12** to form a top cap joint **16.** In an alternative embodiment, body **12** and top cap **14** may be formed with corresponding threaded surfaces or male/female segments as alternative means to secure top cap **14** to body **12.** If snap-fit surfaces are used, sealing components, e.g., o-rings with corresponding mounting channels may be used to create an air/fluid tight seal. Adhesives, epoxies and the like may also be used to secure cap **14** to body **12.**

Top cap **14** may be joined to body **12** before or after the installation of filters depending upon whether the other end of body **12** has been closed. In a further alternative embodiment, top cap **14** is formed together with body **12** in the same molding process. In this embodiment a bottom cap, disclosed below, is not formed in the same molding process as top cap **14** and capsule body **12.**

To enclose a distal, bottom end of capsule body **12**, a bottom cap **18** having a substantially cylindrical shape conformed to the shape and dimensions of body **12** and having an enclosed end and an opposing open end is thermally welded to the distal end of capsule **10** to form bottom cap joint **20.** In an alternative embodiment, body **12** and bottom cap **18** may be formed with corresponding threaded surfaces or male/female segments as alternative means to secure bottom cap **18** to body **12.** If snap-fit surfaces are used, sealing components, e.g., o-rings may be used to create an air/fluid tight seal. Adhesives, epoxies and the like may also be used to secure bottom cap **18** to body **12.**

Bottom cap **18** may be joined to body **12** before or after the installation of filters depending upon whether the other end of body **12** has been closed. In a further alternative embodiment, bottom cap **18** is formed together with body **12** in the same molding process. In this embodiment, a top cap, disclosed above, is not formed in the same molding process as bottom cap **18** and capsule body **12.**

Bottom cap **18** may be formed with a mounting post **22** configured to receive corresponding mounting appendages from a larger assembly such as a mounting panel. The combination of body **12**, top cap **14** and bottom cap **18** form capsule **10.**

In a further alternative embodiment, in place of mounting post **22**, a drainage port may be formed in bottom cap **18** to allow fluids to be drained from the bottom end of capsule **10** without the need to engage a port formed in top cap **14** dedicated as an outlet port as more fully described below. The drainage port may be configured with a male or female connector end and may also include quick disconnect fittings and a modular or integrated check valve to prevent the unwanted flow of fluids and/or gases from the capsule.

Formed on, integral with, or appended to, top cap **14**, are a plurality of ports configured for connection to, and to provide fluid communication with, fluid/gas delivery and/or extraction sources. The ports may be formed with appendages, annular channels, etc., to receive sealing components, e.g., o-rings. More specifically, a cannula-shaped, essentially hollow, inlet port **24** is formed on, or secured to, a lateral edge of top cap **14** to provide a means to infuse fluids and/or gases into the filter chamber formed within capsule **10.** The location of the interface/juncture of inlet port **24** with top cap **14** may be positioned at other locations about the cap other than the lateral edge of top cap **14.**

Inlet port **24** includes modular or integral male or female fittings to accommodate and receive corresponding fittings **38** of fluid delivery tubes or channels to allow fluids and/or gases to traverse the tube/port juncture in an essentially leak free, airtight manner. Inlet port **24** may also include an integral or modular check valve to prevent the release of fluids or spillage when capsule **10** is disassembled to remove, replace or service the internal filter(s).

Formed on, integral with, or appended to, a lateral edge of top cap **14** opposite the lateral edge occupied by inlet port **24** is a cannula-shaped, essentially hollow, vent port **26.** Vent port **26** is formed on, or secured to, top cap **14** to provide a means of egress for unwanted fluids and/or gases present in the filter chamber defined by capsule **10.** The location of the interface/juncture of outlet port **28** may be positioned at other locations about the cap other than a lateral edge of top cap **14.**

Vent port **26** is initially opened to vent out resident gas when capsule **10** is being filled with the desired fluid and/or gas. Vent port **26** is otherwise closed during normal operation, or periodically opened for limited periods of time to allow the release of unwanted accumulated air and/or gas in the filter chamber.

Vent port **26** includes modular or integral male or female fittings to accommodate and receive corresponding fittings **38** of fluid receiving tubes or channels to allow fluids and/or gases to traverse the tube/port juncture in an essentially leak free, airtight manner. Vent port **26** may also include an integral or modular check valve to prevent the release of fluids or spillage when capsule **10** is disassembled to remove, replace or service the internal filter(s).

Also appended to top cap **14** is outlet port **28.** Outlet port **28** may be formed on, integral with, or appended to, top cap **14** at essentially the center of cap **14.** A cylindrical projection **30** may be formed as an interface between top cap **14** and outlet port **28.** Projection **30** forms a chamber above the plane occupied by the top surface of top cap **14** that allows the flow of air, gas or fluids to collect in the chamber and migrate out of capsule **10** after being purified through the enclosed filter. It is particularly advantageous in fluid-based applications to allow the collection and elimination of any unwanted air and/or gas that may have entered the capsule. Should particulate matter pass through filter **34**, chamber **30** provides an area for the particulate matter to collect so as to minimize any impediment the particulate matter may have on the egress of fluids and/or gases out of capsule **10.**

This configuration further allows capsule **10** to be completely filled with a desired fluid and/or gas up to the highest point of the enclosed filter to ensure full utilization of the entire filter. In this manner, utilization of substantially the entire chamber area dedicated to housing one or more filters can be maximized for the intended purpose. Projection **30** further does not impact the overall capsule length as the desired length can be maintained by adjusting the outlet height to match the heights of the inlet and vent ports that may be longer when projection **30** is incorporated into top cap **14.**

Outlet port **28** includes modular or integral male or female fittings to accommodate and receive corresponding fittings **38** of fluid receiving tubes or channels to allow fluids and/or gases to traverse the tube/port juncture in an essentially leak free, airtight manner. Outlet port **28** may also include an integral or modular check valve to prevent the release of fluids or spillage when capsule **10** is disassembled to remove, replace or service the internal filter(s).

It should be understood that the flow of fluids and/or gases through the various ports can be reversed without any reduction in function of the filter capsule. More specifically, what has been identified as inlet port **24** may function as an outlet port and what has been identified as outlet port **28** may function as an inlet port. In addition, what has been identified as vent port **26** may be utilized as either an inlet, or an outlet, port. The apparatus is designed to permit functional flow in either direction.

In this aspect of the disclosure, ports **24**, **26**, **28** are oriented in substantially the same plane wherein each port extends laterally from capsule **10** at an angle substantially orthogonal to a longitudinal axis of capsule **10.** Alternatively, the ports may form an angle with the longitudinal axis about +/-30 ° from the orthogonal orientation. The ports may or may not occupy the same plane and instead, be offset to accommodate attachment to larger customized assemblies.

In a yet further alternative, each port may have a stem portion extending from top cap **14** substantially parallel with the longitudinal axis of capsule **10** and a distal portion continuous with the stem portion that deviates from the parallel orientation with the capsule longitudinal axis. The distal portion forms an angle with the stem portion wherein the distal portion occupies a plane substantially orthogonal to the capsule longitudinal axis. Alternatively, the distal portions may form an angle with the longitudinal axis of the capsule about +/- 30 ° from the orthogonal orientation. The stem portion length can be varied to control the overall length of the capsule.

Referring again to the configuration wherein the ports extend laterally from the top cap 10, this configuration reduces the overall height of the apparatus to enable the apparatus to fit within tight dimensional portions of larger assemblies without any appreciable diminishment in the amount of capsule space dedicated to house one or more filters. The substantially unidirectional port orientation also facilitates installation onto, or into, larger assemblies, particularly panel mount assemblies, as all connection surfaces, i.e., ports face substantially the same direction. The addition of quick couplings further eases installation. A yet further advantage is experienced as the location of all the ports at substantially the highest point of capsule 10 allows for removal of the lower-positioned enclosed filters substantially without spillage.

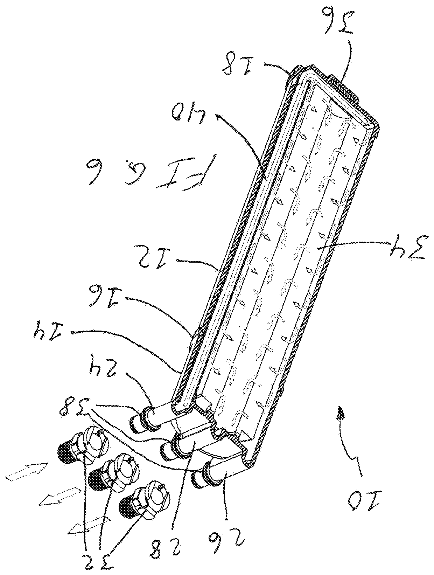

In another aspect of the disclosure as shown in FIG. 6, a transfer tube **40** is formed integral with, or appended to, an inside wall of capsule **10** to provide a channel for delivering warm fluids and/or gases from a top end of capsule **10** to a bottom end of the capsule without requiring the fluid and/or gas to first migrate through the filter chamber. A top end of the transfer tube is connected to, and in fluid communication with, inlet port **24.** If the middle port **28** should be designated as the inlet port, tube **40** would be connected to that port to provide the desired function described below. A bottom end of the transfer tube is open to, and in fluid communication with a bottom end of the filter chamber formed and defined by capsule **10.**

As shown in FIG. 6, fluid introduced into the capsule via inlet port **24** flows to the bottom of capsule **10** via tube **40** and flows up through the annular space formed between the inner wall of capsule **10** and the outer cylindrical wall of filter **34.** The fluid then traverses the filter toward the center of capsule **10** and up and out through outlet port **28.** With this configuration, heated fluids or gases introduced into capsule **10** flow to the bottom of the capsule first before entering into the filter. In this manner, normal heat dynamics cause the heated fluids/gases to rise up the chamber and dissipate heat. The continual transfer of heated fluids/gases into the bottom of the capsule while previously introduced fluids exit transfer tube **40** and rise up the capsule creates a counter-current effect that minimizes the heat gradient differential from the top to the bottom of the capsule.

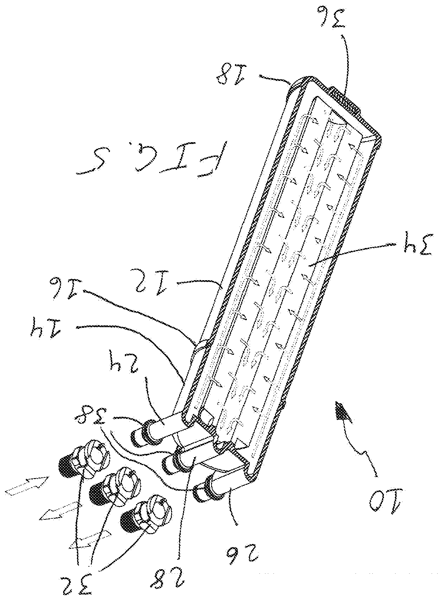

Without tube **40**, fluid introduced into capsule **10** would follow the flow pattern illustrated in FIG. 5. The fluid would enter the capsule from the top, flow down the capsule via gravity feed and traverse filter **40** while flowing down the capsule. Once the fluid flowed through the filter, it would enter the center of capsule **10** and flow out outlet **28.** In this configuration, any heated fluid introduced into the capsule would lose heat as it travels down the capsule and flows into filter **34.** In doing so, a relatively large temperature gradient is created whereby the fluid at the top of capsule **10** would have a much higher temperature than the fluid at the bottom of capsule **10.**

To achieve a specific fluid temperature or target temperature at the bottom of capsule **10**, fluid introduced into the capsule from a top end would have to have a higher temperature than the target temperature to account for heat loss as the heat transfers to fluid toward the bottom of the capsule. This is particularly problematic when the fluid introduced into the capsule is intended to act as a cleaning fluid with a required temperature. This is further problematic due to the natural tendency of heated fluids to rise.

Use of transfer tube **40** substantially eliminates these problems by harnessing well known fluid thermal dynamic properties pursuant to which fluid seeks to reach thermal equilibrium by transferring heat from relatively high heat, relatively low density fluid to fluid having relatively low heat and relatively high density positioned at a higher elevation than the high heat fluid. These are the conditions extant in a filter capsule when fluid having relatively high heat and relatively low density is introduced into the bottom of the capsule. The heat transfers naturally and more efficiently when travelling from the bottom to the top of the capsule. In this manner, the fluid in the capsule is maintained at a much more uniform temperature along the entire length of the capsule as heat transfers up the enclosed fluid.

In an alternative embodiment, to further minimize the temperature gradient, a check valve can be formed integral to, or installed within a distal end of, transfer tube **40** to prevent backflow of the fluid and/or gas up the transfer tube and into inlet port **24.** This ensures any heated fluid introduced into the capsule reaches the bottom of the capsule so as to maintain maximum heat efficiency.

In a further embodiment of the disclosure, the transfer tube is formed on an outside surface of capsule **10** A top end of the tube is connected to, and in fluid communication with, inlet port **24.** A bottom end of the tube is connected to a bore formed in either a bottom end of capsule body **12**, or a side wall of bottom cap **18** so as to provide fluid communication with the bottom interior of capsule **10.**

With the use of the transfer tube, fluids and/or gases, and heated fluids and/or gasses in particular, can be introduced into the filter chamber at substantially the bottom-most end of the filter chamber to allow the heat introduced into the chamber to flow up into the higher layers of fluid and/or gas to ensure a relatively uniform temperature gradient. Prior art systems have the top-mounted inlet ports configured to channel fluids and/or gasses into the uppermost end of the filter chamber which causes the formation of substantial temperature gradients as the cooler, more dense fluid and/or gas tends to migrate to the bottom of the chamber while the hotter, less dense fluid and/or gas tends to remain in the upper end of the chamber.

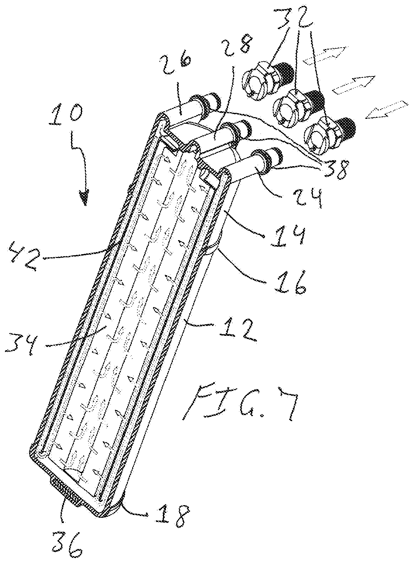

In another aspect of the disclosure as shown in FIG. 7, an encapsulating shield **42** is formed in the annular cavity between filter **34** and the inner wall of capsule **10.** The upper end of shield **42** creates a partition between the three ports so that each is isolated from the others. A bottom end of shield **42** does not extend to the bottom of capsule **10** so as to provide a fluid path between the two annular chambers formed by the presence of shield **42.** A first chamber **43** is formed between the inner wall of capsule **10** and the outer wall of shield **42.** A second chamber **45** is formed between the inner wall of shield **42** and the outer wall of filter **34.**

Fluid introduced into the capsule flows from the inlet port **24** into first annular chamber **43.** The fluid flows down the first annular chamber until reaching the bottom of capsule **10.** The flow then traverses the end of shield **42** and flows up into second annular chamber **45** from which the fluid enters into and traverses the filter. The fluid next flows out of the filter into the central chamber and out the outlet port **28.** In this configuration, vent port **26** must be closed to ensure the flow follows the stated path through the annular chambers and out the outlet port.

The use of shield **42** established a countercurrent of flow that allows the some of the heat from the higher temperature fluid in first annular chamber to transfer through shield **42** into the upwardly flowing and lower-temperature fluid in second annular chamber **45.** This heat exchange enables the fluid to achieve a relatively uniform temperature gradient as the highest temperature fluid at the very top in first chamber **43** will transfer heat to the coolest fluid at the top of second chamber **45.** The next highest temperature fluid below the hottest fluid at the top will transfer heat to the next coolest level of fluid in the second chamber until the fluid reaches the bottom of the shield where the temperature of the fluid on either side of the bottom of shield **42** is approximately equivalent. If heat transfer through shield **42** is undesirable, shield **42** may be constructed from poor heat conducting materials as are well known in the art.

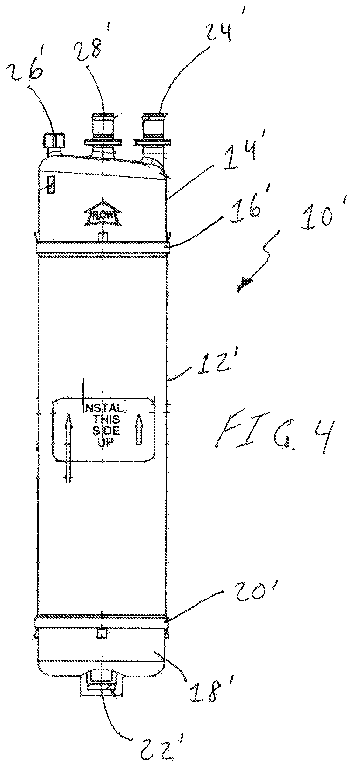

In a yet further aspect of the disclosure as shown in FIG. 4, a filter capsule 10' is formed with, or has appended thereto, a plurality of ports that extend substantially upwardly from a top surface of a top cap **14'.** It should be understood that elements referenced with primed numbers in one embodiment correspond to elements in other embodiments with the same unprimed or differently primed numbers. Capsule **10'** includes a substantially cylindrical body **12'** that defines a generally hollow filter chamber configured to hold one or more filters. Capsule **10'** may be formed in other regular or irregular geometric shapes to accommodate a wide variety of larger assembly configurations to which the capsule is attached and/or to accommodate a wide variety of filter shape configurations depending upon the application.

To enclose a proximal, top end of capsule body **12'**, a top cap **14'** having a substantially cylindrical shape conformed to the shape and dimensions of capsule body **12' and** having one enclosed end and an opposing open end is thermally welded to the proximal end of capsule body **12'** to form a top cap joint **16'**. In an alternative embodiment, capsule body **12'** and top cap **14'** may be formed with corresponding threaded surfaces or male/female segments as alternative means to secure top cap **14'** to capsule body **12'.** If snap-fit surfaces are used, sealing components, e.g., o-rings may be used to create an air/fluid tight seal. Top cap **14'** may be joined to capsule body **12'** before or after the installation of filters depending upon whether the other end of capsule **10'** has been closed.

To enclose a distal, bottom end of capsule **10'**, a bottom cap **18'** having a substantially cylindrical shape conformed to the shape and dimensions of capsule boy **12' and** having an enclosed end and an opposing open end is thermally welded to the distal end of capsule body **12'** to form bottom cap joint **20'.** In an alternative embodiment, capsule body **12'** and bottom cap **18'** may be formed with corresponding threaded surfaces or male/female segments as alternative means to secure bottom cap **18'** to capsule body **12'.** If snap-fit surfaces are used, sealing components, e.g., o-rings may be used to create an air/fluid tight seal. Like top cap **14'**, bottom cap **18'** may be joined to capsule body **12'** before or after installation of filters depending upon whether the other end of capsule **10'** has been closed. Bottom cap **18'** may be formed with a mounting post **22'** configured to receive corresponding mounting appendages from a larger assembly such as a mounting panel.

In an alternative embodiment, in place of mounting post **22'**, a drainage port may be formed in bottom cap **18'** to allow fluids to be drained from the bottom end of capsule **10'** without engaging a port formed in top cap **14'** dedicated as an outlet port as more fully described below. The drainage port may be configured as a male or female connector and may also include quick disconnect fittings and a modular or integrated check valve.

Formed on, or appended to, top cap **14'**, are a plurality of ports configured to provide fluid communication with fluid delivery or extraction sources. A cannula-shaped inlet port **24'** is essentially hollow and formed on, or secured to, a lateral edge of top cap **14'** to provide a means to infuse fluids and/or gases into the filter chamber contained in capsule **10'.** The location of the interface/juncture of inlet port **24'** may be positioned at other locations other than a lateral edge of top cap **14'.**

Inlet port **24'** includes modular or integral male or female fittings to accommodate and receive corresponding fittings of fluid delivery tubes or channels to allow fluids and/or gases to traverse the tube/port juncture in an essentially leak free, airtight manner. Inlet port **24'** may also include an integral or modular check valve to prevent the release of fluids or spillage when capsule **10'** is disassembled to remove, replace or service the internal filter(s).

Formed on, or appended to, a lateral edge of top cap **14'** opposite the lateral edge occupied by inlet port **24'** is a cannula-shaped vent port **26'.** Vent port **26'** is essentially hollow and formed on, or secured to, top cap **14** to provide a means of egress for undesired fluids and/or gases present in the filter chamber contained in capsule **10'.** It also provides a means to register the internal pressure of capsule **10'** to ambient pressure conditions. The location of the interface/juncture of vent port **26'** may be positioned at other locations other than a lateral edge of top cap **14'.**

Vent port **26'** includes modular or integral male or female fittings to accommodate and receive corresponding fittings of fluid receiving tubes or channels to allow fluids and/or gases to traverse the tube/port juncture in an essentially leak free, airtight manner. Vent port **26'** may also include an integral or modular check valve to prevent the release of fluids or spillage when capsule **10'** is disassembled to remove, replace or service the internal filter(s).

Also appended to top cap **14'** is a cannula-shaped outlet port **28'.** Outlet port **28'** may be formed on, or appended to, top cap **14'** at essentially a center of cap **14'.** A cylindrical projection **30'** may be formed as an interface between top cap **14'** and outlet port **28'.** Projection **30'** provides an enclosed area above the plane of top cap **14'** to allow air, or other unwanted substances or gases to rise and concentrate for release through outlet port **28'.** This configuration allows capsule **10'** to be completely filled with a desired fluid and/or gas without compromising any area of the chamber formed by capsule 10' dedicated to housing filters in a desired fluid and/or gas.

Outlet port **28'** includes modular or integral male or female fittings to accommodate and receive corresponding fittings of fluid receiving tubes or channels to allow fluids and/or gases to traverse the tube/port juncture in an essentially leak free, airtight manner. Outlet port **28'** may also include an integral or modular check valve to prevent the release of fluids or spillage when capsule **10'** is disassembled to remove, replace or service the internal filter(s).

In this aspect of the disclosure, ports **24', 26', 28'** are oriented in substantially the same plane wherein each port extends vertically or upwardly from capsule **10'** wherein the occupied plane by the ports is substantially parallel to a longitudinal axis of capsule **10'.** Alternatively, the ports may occupy a plane that forms an angle with the longitudinal axis that is about +/-45 ° from the parallel orientation. In a further alternative embodiment, the ports may or may not occupy the same plane and instead, be offset to accommodate attachment to larger customized assemblies.

This configuration with substantially uniform port orientations whereby the ports extend substantially vertically from the top of capsule **10'** does not reduce the overall height of the apparatus, but facilitates the manual connection to mated fittings when the mated fittings are not panel mounted. The addition of quick couplings further eases installation. And the location of all the ports at substantially the highest point of capsule **10'** allows for removal of the contained filters without spillage.

In another aspect of the disclosure, a transfer tube **40'** is formed integral with, or appended to, an inside wall of capsule **10'** to provide a channel for delivering warm fluids and/or gases from a top end of capsule **10'** to a bottom end of capsule **10'** without requiring the fluid and/or gas to flow through the filter chamber. A top end of the transfer tube is connected to, and in fluid communication with, inlet port **24'.** A bottom end of the transfer tube is open to, and in fluid communication with, a bottom end of the filter chamber formed by capsule **10'.** In an alternative embodiment, a check valve can be formed integral to, or installed within a distal end of transfer tube **40'** to prevent backflow of the fluid and/or gas up the transfer tube and into inlet port **24'.**

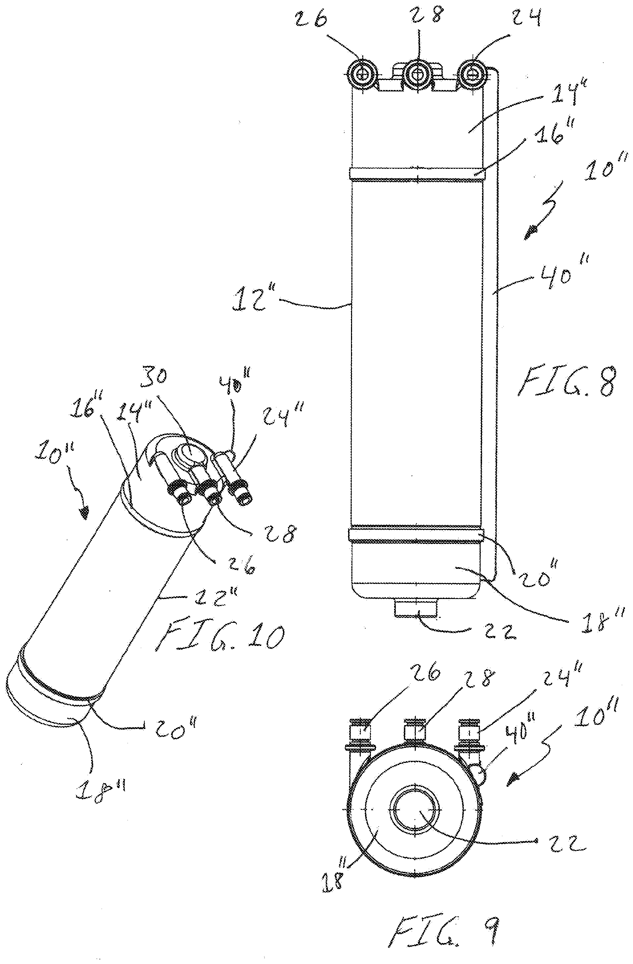

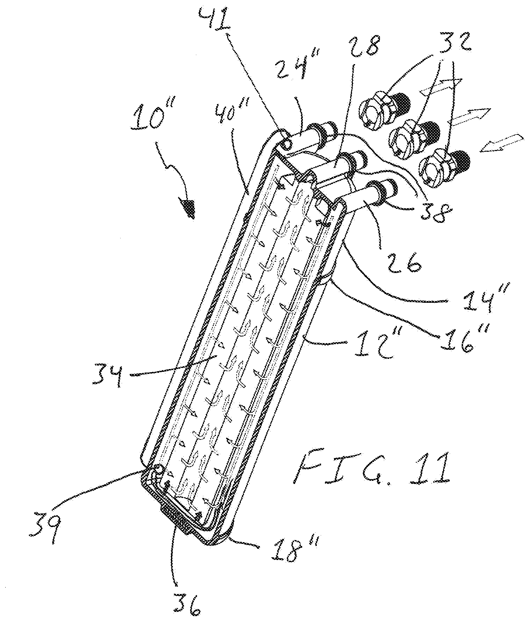

In a further embodiment of the disclosure, as shown in FIGS. 8-11, an exterior transfer tube **40"** is formed on an outside surface of a capsule **10".** A top end of the tube is connected to, and in fluid communication with, an inlet port **24"** via a top bore **41.** A bottom end of the tube is connected to a bore **39** formed in either a bottom end of capsule **10"**, or a side wall of a bottom cap **18"** so as to provide fluid communication with the interior of capsule **10".**

With the use of external transfer tube **40"**, fluids and/or gases, and heated fluids and/or gasses in particular, can be introduced into the filter chamber at substantially the bottom most end of the filter chamber to harness the natural tendency of heated, and therefore, less dense, fluids and/or gases to rise so as to allow the heat introduced into the chamber to transfer up into the higher layers of fluid and/or gas to ensure a relatively uniform temperature gradient. Prior art systems have the top mounted inlet ports channeling fluids and/or gasses into the uppermost end of the filter chamber that causes substantial temperature gradients to form as the cooler fluid and/or gas tends to migrate to the bottom of the chamber while the hotter fluid and/or gas tends to remain in the upper end of the chamber.

In a yet further aspect of the disclosure, an RFID chip **36** is attached to, or embedded in, a bottom portion of bottom cap **18.** In an alternative embodiment, the bottom of capsule **10** is formed as an integral part of the capsule with chip **36** embedded in the capsule forming material during manufacture. Chip **36** is embedded so as not to have any exposure to fluid or gas either inside or outside capsule **10**, and to ensure the chip is not lost or improperly replaced with an unauthorized chip such as is possible with chips secured to items with adhesive and the like. Chip **36** is configured to endure high temperature environments and is rated for high temperatures. With this configuration, chip **36** can be exposed to the high temperatures of hot water sanitation processes.

The capsules, caps and ports described herein may be constructed from high heat resilient plastics, such as polypropylene, polyethylene, nylon, PFA and the like. The materials are used in conventional injection molding processes to create the capsules and related components. A key consideration for material selection is the material's ability to withstand high heat environments such as those found in sterilization equipment and autoclaves, as well as other sterilization means like gamma irradiation.

The quick couplings are configured to be compatible with coupling components manufactured and sold by, by way of example and not limitation, Linktech (Ventura, California), Colder Plastics Company (St. Paul, Minnesota) and John Guest Corp. (Fairfield, New Jersey) . The check valves may be of any conventional variety known in the art that ensures one-way flow of fluids and/or gases that flow through the capsules. Examples include those sold by the aforementioned companies. It should further be understood that the male/female configuration of the set of quick-connect couplings incorporated onto a capsule may be all male, all female, or a combination of both depending upon the particular application.

While the present disclosure has been described in connection with several embodiments thereof, it will be apparent to those skilled in the art that many changes and modifications may be made without departing from the scope of the present disclosure.

## Claims

1. A filter capsule apparatus (10) comprising:
a container (12) having a substantially cylindrical wall and portions defining a bottom end;
a top cap (14) secured to a top end of the container (12), wherein the combination of the substantially cylindrical wall, the bottom end and the top cap (14) defines a filter chamber having a top chamber end and a bottom chamber end;
a cylindrical filter (34) secured in the chamber, wherein an annular space is defined by the inner surface of the substantially cylindrical wall and an exterior surface of the filter (34), wherein the annular space extends uninterrupted the entire axial length of the filter (34), and wherein heated fluid is permitted to enter the filter radially inwardly along the axial length of the filter (34) from the annular space;
a plurality of ports (24, 26, 28) including an inlet port (24) and an outlet port (28) extending from the top cap (14), and, **characterized in that** the filter capsule apparatus (10) further comprises
a transfer tube (40) having an elongate cylindrical wall connected along its length to, and extending along a substantial length of, the container wall, wherein a portion of the tube wall along its axial length is integral with, or registered against, the container wall, wherein a fluid receiving first end is secured to, and in fluid communication with, the inlet port (24) and a fluid delivery second end is secured in close proximity to the bottom of the container (12), wherein the second end is in fluid communication with the bottom chamber end, whereby when heated fluid is introduced into the filter capsule, it enters through the inlet port (24), travels downwardly inside the transfer tube (40), exits the transfer tube second end into the bottom chamber end, flows upwardly in the annular space of the filter chamber, is filtered by the filter (34), flows out of the filter (34) and exits the filter capsule apparatus (10) via the outlet port (28).

2. The filter capsule (10) of claim 1, wherein the plurality of ports (24, 26, 28) occupy substantially the same plane and wherein the plane is either parallel to, orthogonal to, or +/- 45° from, a longitudinal axis of the container (12).

3. The filter capsule (10) of claim 1, wherein at least one of the plurality of ports (24, 26, 28) has a quick connect connector secured to the one port.

4. The filter capsule (10) of claim 3, wherein at least one of the plurality of ports (24, 26, 28) has a check valve secured to the one port.

5. The filter capsule (10) of claim 1, wherein at least one port of the plurality of ports (24, 26, 28) has a check valve secured to the one port.

6. The filter capsule (10) of claim 1, wherein the transfer tube (40) is secured to an inner wall or an outer wall of the container (12).

7. The filter capsule (10) of claim 1, further comprising an RFID chip (36) secured to, or embedded in material forming, the container (12).

8. The filter capsule (10) of claim 1, wherein the top cap (14) has portions defining a projection chamber, wherein the projection chamber is in fluid communication with one of the plurality of ports (24, 26, 28).

9. Use of a filter capsule apparatus (10) for creating a uniform temperature gradient of a fluid, the filter capsule apparatus (10) comprising:
a container (12) having a substantially cylindrical wall;
a bottom cap (18) secured to a bottom end of the substantially cylindrical wall;
a top cap (14) secured to a top end of the substantially cylindrical wall, wherein the combination of the substantially cylindrical wall, bottom cap (18) and top cap (14) define a filter chamber, wherein the filter chamber has a chamber top end and a chamber bottom end;
a filter (34) secured in the filter chamber;
a plurality of ports (24, 26, 28) including an inlet port (24), an outlet port (28), and a vent port (26) extending from a top end of the top cap (14), and, **characterized in that** the filter capsule apparatus (10) further comprises
a cylindrical heat transfer shield (42) secured in the filter chamber radially spaced from and situated annually about the filter (34) wherein the shield (42) extends from the chamber top end to a plane in proximity to, but not in contact with, the chamber bottom end so as to form a gap between a bottom edge of the shield (42) and the chamber bottom end, wherein an inner surface of the substantially cylindrical wall in combination with an outer wall surface of the shield (42) defines a first annular chamber (43) in fluid communication with the inlet port (24), wherein an inner wall surface of the shield (42) in combination with an outer surface of the cylindrical filter (34) defines a second annular chamber (45) about the filter (42), wherein the first and second chambers (43, 45) are substantially concentric in spatial orientation, wherein the first chamber (43) and the second chamber (45) are in fluid communication via the gap defined by the combination of the chamber bottom end and the bottom edge of the shield (42),
whereby when heated fluid is introduced into the capsule and the vent port (26) is closed, the fluid enters through the inlet port (24), travels down the first annular chamber until reaching the chamber bottom end, then traverses the end of shield (42) and flows up into the second annular chamber (45) from which it enters into and traverses the filter (34), and flows out of the filter (34) through the outlet port (28).

10. The use of claim 9, wherein the plurality of ports (24, 26, 28) occupy substantially the same plane and wherein the plane is either parallel to, orthogonal to, or +/- 45° from, a longitudinal axis of the container.

11. The use of claim 9, wherein at least one of the plurality of ports (24, 26, 28) has a quick connect connector secured to the one port.

12. The use of claim 9, wherein at least one port of the plurality of ports (24, 26, 28) has a check valve secured to the one port.

13. The use of claim 9, further comprising an RFID chip (36) secured to, or embedded in material forming, the container (12).

14. The use of claim 9, wherein the top cap (14) has portions defining a projection chamber, wherein the projection chamber is in fluid communication with one of the plurality of ports (24, 26, 28).

## Patentansprüche

1. Eine Filterkapselvorrichtung (10), umfassend:
einen Behälter (12) mit einer im Wesentlichen zylindrischen Wand und Abschnitten, die ein unteres Ende definieren;
eine obere Kappe (14), die an einem oberen Ende des Behälters (12) fixiert ist, wobei die Kombination der im Wesentlichen zylindrischen Wand, des unteren Endes und der oberen Kappe (14) eine Filterkammer mit einem oberen Kammerende und einem unteren Kammerende definiert;
einen zylindrischen Filter (34), der in der Kammer fixiert ist, wobei ein Ringraum durch die Innenfläche der im Wesentlichen zylindrischen Wand und eine Außenfläche des Filters (34) definiert wird, wobei sich der Ringraum ununterbrochen über die gesamte axiale Länge des Filters (34) erstreckt und wobei erwärmtes Fluid über die axiale Länge des Filters (34) hinweg aus dem Ringraum radial nach innen in den Filter eintreten kann;
mehrere Öffnungen (24, 26, 28), einschließlich einer Einlassöffnung (24) und einer Auslassöffnung (28), die sich von der oberen Kappe (14) aus erstrecken, und **dadurch gekennzeichnet, dass** die Filterkapselvorrichtung (10) ferner Folgendes umfasst:
ein Übertragungsrohr (40) mit einer länglichen zylindrischen Wand, die über ihre Länge hinweg mit der Behälterwand verbunden ist und sich entlang einer wesentlichen Länge dieser erstreckt, wobei ein Abschnitt der Rohrwand über seine axiale Länge hinweg mit der Behälterwand integriert oder bündig ist, wobei ein ein Fluid aufnehmendes erstes Ende an der Einlassöffnung (24) fixiert ist und mit dieser in Fluidverbindung steht und ein ein Fluid abgebendes zweites Ende in unmittelbarer Nähe zum Boden des Behälters (12) fixiert ist, wobei das zweite Ende in Fluidverbindung mit dem unteren Kammerende steht, wobei, wenn erwärmtes Fluid in die Filterkapsel eingeführt wird, dieses durch die Einlassöffnung (24) eintritt, sich innerhalb des Übertragungsrohrs (40) nach unten bewegt, aus dem zweiten Ende des Übertragungsrohrs in das untere Kammerende austritt, im Ringraum der Filterkammer nach oben fließt, vom Filter (34) gefiltert wird, aus dem Filter (34) heraus fließt und über die Auslassöffnung (28) aus der Filterkapselvorrichtung (10) austritt.

2. Die Filterkapsel (10) nach Anspruch 1, wobei die mehreren Öffnungen (24, 26, 28) im Wesentlichen dieselbe Ebene einnehmen und wobei die Ebene entweder parallel, orthogonal oder in einem Winkel von +/- 45° zu einer Längsachse des Behälters (12) angeordnet ist.

3. Die Filterkapsel (10) nach Anspruch 1, wobei mindestens eine der mehreren Öffnungen (24, 26, 28) einen Schnellverbindungsanschluss aufweist, der an der einen Öffnung fixiert ist.

4. Die Filterkapsel (10) nach Anspruch 3, wobei mindestens eine der mehreren Öffnungen (24, 26, 28) ein Rückschlagventil aufweist, das an der einen Öffnung fixiert ist.

5. Die Filterkapsel (10) nach Anspruch 1, wobei mindestens eine Öffnung der mehreren Öffnungen (24, 26, 28) ein Rückschlagventil aufweist, das an der einen Öffnung fixiert ist.

6. Die Filterkapsel (10) nach Anspruch 1, wobei das Übertragungsrohr (40) an einer Innenwand oder einer Außenwand des Behälters (12) fixiert ist.

7. Die Filterkapsel (10) nach Anspruch 1, ferner umfassend einen RFID-Chip (36), der an dem Behälter (12) fixiert ist oder in ein Material eingebettet ist, das diesen Behälter bildet.

8. Die Filterkapsel (10) nach Anspruch 1, wobei die obere Kappe (14) Abschnitte aufweist, die eine Projektionskammer definieren, wobei die Projektionskammer in Fluidverbindung mit einer der mehreren Öffnungen (24, 26, 28) steht.

9. Die Verwendung einer Filterkapselvorrichtung (10) zum Erzeugen eines gleichmäßigen Temperaturgradienten eines Fluids, wobei die Filterkapselvorrichtung (10) Folgendes umfasst:
einen Behälter (12) mit einer im Wesentlichen zylindrischen Wand;
eine untere Kappe (18), die an einem unteren Ende der im Wesentlichen zylindrischen Wand fixiert ist;
eine obere Kappe (14), die an einem oberen Ende der im Wesentlichen zylindrischen Wand fixiert ist, wobei die Kombination der im Wesentlichen zylindrischen Wand, der unteren Kappe (18) und der oberen Kappe (14) eine Filterkammer definiert, wobei die Filterkammer ein oberes Kammerende und ein unteres Kammerende aufweist;
einen Filter (34), der in der Filterkammer fixiert ist;
mehrere Öffnungen (24, 26, 28), einschließlich einer Einlassöffnung (24), einer Auslassöffnung (28) und einer Entlüftungsöffnung (26), die sich von einem oberen Ende der oberen Kappe (14) erstrecken, und **dadurch gekennzeichnet, dass** die Filterkapselvorrichtung (10) ferner Folgendes umfasst:
eine zylindrische Wärmeübertragungsabschirmung (42), die in der Filterkammer fixiert ist, radial von dem Filter (34) beabstandet ist und ringförmig um diesen angeordnet ist, wobei sich die Abschirmung (42) vom oberen Kammerende zu einer Ebene in der Nähe des unteren Kammerendes, jedoch nicht in Kontakt mit diesem, erstreckt, um einen Spalt zwischen einer Unterkante der Abschirmung (42) und dem unteren Kammerende zu bilden, wobei eine Innenfläche der im Wesentlichen zylindrischen Wand in Kombination mit einer Außenwandfläche der Abschirmung (42) eine erste ringförmige Kammer (43) definiert, die in Fluidverbindung mit der Einlassöffnung (24) steht, wobei eine Innenwandfläche der Abschirmung (42) in Kombination mit einer Außenfläche des zylindrischen Filters (34) eine zweite ringförmige Kammer (45) um den Filter (42) definiert, wobei die erste und die zweite Kammer (43, 45) in ihrer räumlichen Ausrichtung im Wesentlichen konzentrisch sind, wobei die erste Kammer (43) und die zweite Kammer (45) über den durch die Kombination des unteren Kammerendes und der Unterkante der Abschirmung (42) definierten Spalt in Fluidverbindung stehen,
wobei, wenn erwärmtes Fluid in die Kapsel eingeführt wird und die Entlüftungsöffnung (26) geschlossen ist, das Fluid durch die Einlassöffnung (24) eintritt, sich in der ersten ringförmigen Kammer bis zum unteren Kammerende nach unten bewegt, dann das Ende der Abschirmung (42) durchquert und nach oben in die zweite ringförmige Kammer (45) fließt, aus welcher es in den Filter (34) eintritt und diesen durchquert, und durch die Auslassöffnung (28) aus dem Filter (34) heraus fließt.

10. Die Verwendung nach Anspruch 9, wobei die mehreren Öffnungen (24, 26, 28) im Wesentlichen dieselbe Ebene einnehmen und wobei die Ebene entweder parallel, orthogonal oder in einem Winkel von +/-45° zu einer Längsachse des Behälters angeordnet ist.

11. Die Verwendung nach Anspruch 9, wobei mindestens eine der mehreren Öffnungen (24, 26, 28) einen Schnellverbindungsanschluss aufweist, der an der einen Öffnung fixiert ist.

12. Die Verwendung nach Anspruch 9, wobei mindestens eine Öffnung der mehreren Öffnungen (24, 26, 28) ein Rückschlagventil aufweist, das an der einen Öffnung fixiert ist.

13. Die Verwendung nach Anspruch 9, ferner umfassend einen RFID-Chip (36), der an dem Behälter (12) fixiert ist oder in ein Material eingebettet ist, das diesen Behälter bildet.

14. Die Verwendung nach Anspruch 9, wobei die obere Kappe (14) Abschnitte aufweist, die eine Projektionskammer definieren, wobei die Projektionskammer in Fluidverbindung mit einer der mehreren Öffnungen (24, 26, 28) steht.

## Revendications

1. Appareil à capsule filtrante (10) comprenant :
un récipient (12) ayant une paroi sensiblement cylindrique et des parties définissant une extrémité inférieure ;
un capuchon supérieur (14) fixé à une extrémité supérieure du récipient (12), dans lequel la combinaison de la paroi sensiblement cylindrique, de l'extrémité inférieure et du capuchon supérieur (14) définit une chambre de filtre ayant une extrémité de chambre supérieure et une extrémité de chambre inférieure ;
un filtre cylindrique (34) fixé dans la chambre, dans lequel un espace annulaire est défini par la surface intérieure de la paroi sensiblement cylindrique et une surface extérieure du filtre (34), dans lequel l'espace annulaire s'étend sans interruption sur toute la longueur axiale du filtre (34), et dans lequel le fluide chauffé peut pénétrer dans le filtre radialement vers l'intérieur le long de la longueur axiale du filtre (34) depuis l'espace annulaire ;
une pluralité d'orifices (24, 26, 28) comprenant un orifice d'entrée (24) et un orifice de sortie (28) s'étendant à partir du capuchon supérieur (14), et, **caractérisé en ce que** l'appareil à capsule filtrante (10) comprend en outre
un tube de transfert (40) ayant une paroi cylindrique allongée connectée le long de sa longueur à, et s'étendant le long d'une longueur substantielle de, la paroi du récipient, dans laquelle une partie de la paroi du tube le long de sa longueur axiale fait partie intégrante de, ou est appliquée contre, la paroi du récipient, dans lequel une première extrémité de réception de fluide est fixée à, et en communication fluidique avec, l'orifice d'entrée (24) et une seconde extrémité de distribution de fluide est fixée à proximité immédiate du fond du récipient (12), dans lequel la seconde extrémité est en communication fluidique avec l'extrémité de la chambre inférieure, grâce à quoi, lorsque du fluide chauffé est introduit dans la capsule filtrante, il pénètre par l'orifice d'entrée (24), se déplace vers le bas à l'intérieur du tube de transfert (40), sort de la seconde extrémité du tube de transfert dans l'extrémité de la chambre inférieure, s'écoule vers le haut dans l'espace annulaire de la chambre de filtration, est filtré par le filtre (34), s'écoule hors du filtre (34) et sort de l'appareil à capsule filtrante (10) par l'orifice de sortie (28).

2. Capsule filtrante (10) selon la revendication 1, dans laquelle la pluralité d'orifices (24, 26, 28) occupe sensiblement le même plan et dans lequel le plan est parallèle à, orthogonal à, ou à+/- 45° par rapport à un axe longitudinal du récipient (12).

3. Capsule filtrante (10) selon la revendication 1, dans laquelle au moins l'un de la pluralité d'orifices (24, 26, 28) a un connecteur à connexion rapide fixé à l'orifice.

4. Capsule filtrante (10) selon la revendication 3, dans laquelle au moins l'un de la pluralité d'orifices (24, 26, 28) a un clapet anti-retour fixé à l'orifice.

5. Capsule filtrante (10) selon la revendication 1, dans laquelle au moins l'un de la pluralité d'orifices (24, 26, 28) a un clapet anti-retour fixé à l'orifice.

6. Capsule filtrante (10) selon la revendication 1, dans laquelle le tube de transfert (40) est fixé à une paroi intérieure ou à une paroi extérieure du récipient (12).

7. Capsule filtrante (10) selon la revendication 1, comprenant en outre une puce RFID (36) fixée à, ou incorporée dans le matériau formant, le récipient (12).

8. Capsule filtrante (10) selon la revendication 1, dans laquelle le capuchon supérieur (14) a des parties définissant une chambre de projection, dans lequel la chambre de projection est en communication fluidique avec l'un de la pluralité d'orifices (24, 26, 28).

9. Utilisation d'un appareil à capsule filtrante (10) pour créer un gradient de température uniforme d'un fluide, l'appareil à capsule filtrante (10) comprenant :
un récipient (12) ayant une paroi sensiblement cylindrique ;
un capuchon inférieur (18) fixé à une extrémité inférieure de la paroi sensiblement cylindrique ;
un capuchon supérieur (14) fixé à une extrémité supérieure de la paroi sensiblement cylindrique, dans laquelle la combinaison de la paroi sensiblement cylindrique, du capuchon inférieur (18) et du capuchon supérieur (14) définit une chambre de filtre, dans laquelle la chambre de filtre a une extrémité de chambre supérieure et une extrémité de chambre inférieure ;
un filtre (34) fixé dans la chambre de filtre ;
une pluralité d'orifices (24, 26, 28) comprenant un orifice d'entrée (24), un orifice de sortie (28) et un orifice de ventilation (26) s'étendant à partir d'une extrémité supérieure du capuchon supérieur (14), et, **caractérisée** en que l'appareil à capsule filtrante (10) comprend en outre
un écran cylindrique de transfert de chaleur (42) fixé dans la chambre de filtre à distance radiale de et situé annulairement autour du filtre (34) dans lequel l'écran (42) s'étend de l'extrémité supérieure de la chambre à un plan à proximité, mais pas en contact avec, l'extrémité inférieure de la chambre de manière à former un espace entre un bord inférieur de l'écran (42) et l'extrémité inférieure de la chambre, dans lequel une surface intérieure de la paroi sensiblement cylindrique en combinaison avec une surface de paroi extérieure de l'écran (42) définit une première chambre annulaire (43) en communication fluidique avec l'orifice d'entrée (24), dans lequel une surface de paroi intérieure de l'écran (42) en combinaison avec une surface extérieure du filtre cylindrique (34) définit une seconde chambre annulaire (45) autour du filtre (42), dans lequel les première et seconde chambres (43, 45) sont sensiblement concentriques dans l'orientation spatiale, dans lequel la première chambre (43) et la seconde chambre (45) sont en communication fluidique via l'espace défini par la combinaison de l'extrémité inférieure de la chambre et le bord inférieur de l'écran (42),
moyennant quoi, lorsque du fluide chauffé est introduit dans la capsule et que l'orifice de ventilation (26) est fermé, le fluide pénètre par l'orifice d'entrée (24), descend dans la première chambre annulaire jusqu'à atteindre l'extrémité inférieure de la chambre, puis traverse l'extrémité de l'écran (42) et s'écoule vers le haut dans la deuxième chambre annulaire (45) à partir de laquelle il entre dans et traverse le filtre (34), et s'écoule hors du filtre (34) par l'orifice de sortie (28).

10. Utilisation selon la revendication 9, dans laquelle la pluralité d'orifices (24, 26, 28) occupe sensiblement le même plan et dans lequel le plan est parallèle à, orthogonal à, ou à+/- 45° par rapport à un axe longitudinal du récipient.

11. Utilisation selon la revendication 9, dans laquelle au moins l'un de la pluralité d'orifices (24, 26, 28) a un connecteur à connexion rapide fixé à l'orifice.

12. Utilisation selon la revendication 9, dans laquelle au moins l'un de la pluralité d'orifices (24, 26, 28) a un clapet anti-retour fixé à l'orifice.

13. Utilisation selon la revendication 9, comprenant en outre une puce RFID (36) fixée à, ou incorporée dans le matériau formant, le récipient (12).

14. Utilisation selon la revendication 9, dans laquelle le capuchon supérieur (14) a des parties définissant une chambre de projection, dans laquelle la chambre de projection est en communication fluidique avec l'un de la pluralité d'orifices (24, 26, 28).
